# EUROPEAN PATENT SPECIFICATION

(11) **EP 3 855 082 B1**
(45) Date of publication and mention of the grant of the patent: **17.04.2024**
(21) Application number: 21151079.7
(22) Date of filing: 12.01.2021
(51) Int. Cl.: F24F 3/00, F24F 7/06, F24F 11/72, F24F 11/77, F24F 11/89, F24F 110/40, F24F 140/10

(54) **VENTILATION OR AIR CONDITIONING SYSTEM**
BELÜFTUNGS- ODER KLIMA-ANLAGE
SYSTÈME DE VENTILATION OU DE CLIMATISATION

(30) Priority: 13.01.2020 IT 202000000448
(43) Date of publication of application: 28.07.2021
(73) Proprietor: Ideal Clima S.r.l., 25135 Brescia (BS) (IT)
(72) Inventor: RUFFINI, Vittorio, 25121 BRESCIA (BS) (IT)
(74) Representative: Bonatto, Marco

(56) References cited:
- EP-A2- 0 248 380
- CN-A- 106 051 966
- FR-A1- 2 805 601
- GB-A- 2 209 078
- JP-A- S5 149 547
- JP-A- S5 451 239
- JP-A- H03 212 181
- JP-A- 2010 190 484
- US-A- 4 437 608
- US-A- 4 995 307
- US-A1- 2006 217 055
- US-A1- 2019 242 601

## Description

### Field of the invention

The present invention relates to a ventilation or air conditioning system, and in particular for air-conditioning spaces such as houses, offices, shops, laboratories, workshops, warehouses and other working places or buildings.

### Background

Various solutions are available on the market to air-condition or ventilate living or working spaces such as houses, offices, shops or laboratories.

One of them provides to install a single air generator, either conditioned or not, producing an air flow which is then brought to several spaces, such as a room, by means of suitable ducts.

In such a case, the air generator is normally provided with a plenum, from which the various ducts directed to the various rooms or other spaces branch out.

It is presently known building in such a way multi-zone ventilation or air conditioning systems, which aim at providing each room or space or more generally each thermal zone, with different climate conditions, such as a different temperature, humidity or ventilation air flow rate.

A thermal zone may comprise more rooms or, if at all, only one.
Prior art document JP S5149547 A describes an air conditioning facility in which a single air conditioning unit blower blows air to a plurality of rooms via branch ducts.

A switch is provided for each of the ventilation duct opening and closing valves in conjunction with each duct opening and closing valve, and a resistor is connected to each of the switches. The air flow is controlled by controlling the rotation speed of the blower with an electric power that deriving from the resistance value of each resistor, so that the air flowing into each of the air-conditioned rooms is a predetermined amount depending on the resistance value.

Patent documents JP-H03-212181 and GB2209078 disclose blower motor control systems and methods.

Multi-zone systems are known wherein each thermal zone is controlled by a respective thermostat which is usually connected to a flow rate adjusting device which is connected to the air ducts.

Usually such adjusting devices are shutters powered by actuators which can simply be of the wholly closed/wholly open type (On/Off) or modulating, i.e. capable of arranging the shutter in any intermediate position between the wholly closed and the wholly open ones.

Multi-zone systems highlight a problem in adjusting the flow rate: adjusting the shutters zone by zone of many zones requires adjusting with great precision the flow rate of the fan of the air generator over a very wide range.

This makes a fan with only three speeds driven by an asynchronous alternating current motor almost always unsuitable.

Let us think about the case of a large air generator, sized to supply ten closed spaces, which is temporarily supplying only one; despite operating at the minimum speed that fan will deliver an excessive flow rate into the only closed space being delivered, with a consequent excessive noise of the air and thermal drift, wherein thermal drift means the condition in which the thermal power provided to the closed space is excessive, the room temperature varies too quickly and overcomes the setpoint required by the thermostat resulting in discomfort for the occupants.

A known solution for such a drawback is adjusting the fan flow rate on the basis of the number of open shutters: let Pmax be the maximum power of the motor, N the total number of the shutters and n the number of the open shutters at a given instant, the EC motor is operated at a power P = Pmax*n/N.

According to the author of the present invention such control strategy unsuitably reduces the problems of excessive noise and thermal drift in the systems with modulating shutters and sometimes, due to the relative inaccurate control, also in those with shutters of the wholly closed/wholly open type.

An object of the present invention is to overcome the above mentioned drawbacks and in particular provide a system and process for the ventilation or air-conditioning of spaces, such as houses, offices, shops or other trade locations, workshops, laboratories, factories, which further reduces the problems of noise and/or thermal drift in multi-zone ventilation or air conditioning systems.

### Summary of the invention

Such object is achieved, in a first aspect of the present invention, by a ventilation or air conditioning system having the features according to claim **1.**

In a particular embodiment of the invention, the electric motor (**13**) is provided with power supply brushes and it is of the asynchronous or synchronous alternating current type or of the direct current type.

In a particular embodiment of the invention, the ventilation or air conditioning comprises a motor supply system (**23**) arranged for supplying the electric motor (**13**) with a time-varying electric voltage and/or current and in turn comprising a semiconductor switch (**25)** and a supply control system (**29)** arranged for causing the current and/or voltage from the semiconductor switch (**25)** and which with the latter supplies the electric motor (**13)**, to have:
a) a root mean square equal to a predetermined target value, unless a first predetermined tolerance and/or
b) a symmetry degree equal to or lower than a predetermined symmetry threshold.

The dependent claims are directed to further preferred embodiments of the invention.

The advantages attainable with the present invention shall become more readily apparent, to the person skilled in the art, by the following detailed description of a particular, non-limiting example of embodiment, illustrated with reference to the following schematic figures.

### List of Figures

Figure **1** shows the functional scheme of a ventilation or air conditioning system according to a particular embodiment of the invention;
Figure **2** shows a perspective view of the air generator of the ventilation or air conditioning system of Figure **1****;**
Figure **3** shows a functional scheme of the fan control system of the air generator of Figure **2****;**
Figure **4** shows a first possible functional scheme of the motor supply system of the fan of the air generator of Figure **2****;**
Figure **5** shows a second possible functional scheme of the motor supply system of the fan of the air generator of Figure **2****.**

### Detailed description

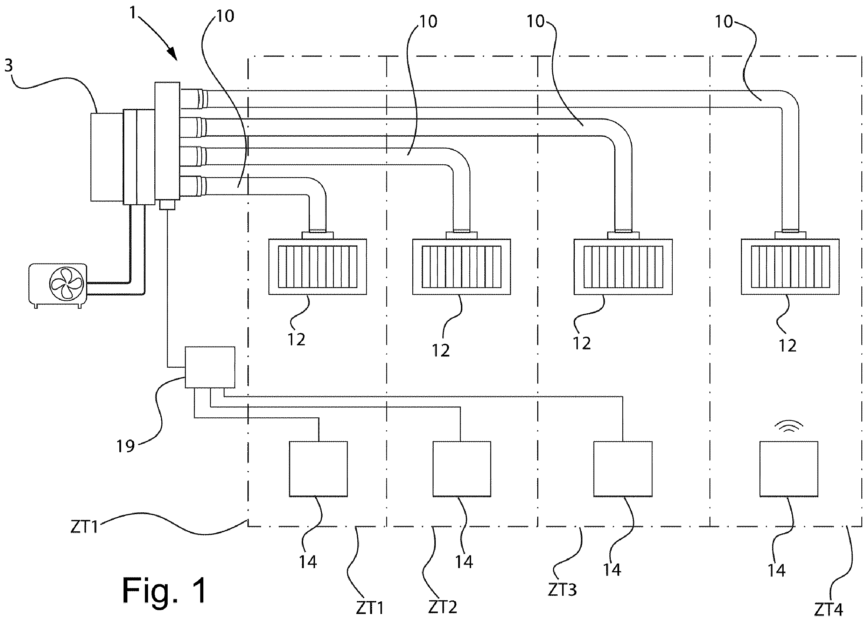

Figures **1-4** show a ventilation or air-conditioning system according to one first particular embodiment of the invention, indicated with the overall reference numeral **1.**

The system **1** may be adapted to ventilate, heat or condition physical spaces such as houses, shops, laboratories, workshops, factories, warehouses, cellars or generally buildings.

The system **1** comprises an air generator **3** in its turn comprising:
- a plenum **5,** i.e. an assembly of a pressure chamber or a settling chamber forming a compartment **7** therein and at least an outlet port **9** in fluid communication with the internal compartment **7;** and
- a fan **11** arranged for introducing air into the internal compartment **7** so as to generate a flow of air leaving the at least one outlet port **9.**

The outlet port **9** may be connected to one or more delivery ducts **10** which convey the air output from the outlet port or ports **9** to respective delivery nozzles **12** located in one or more spaces to be ventilated or air conditioned.

The delivery nozzles **12** may for instance be arranged inside rooms or other thermal zones **ZT1-ZT4** more or less far from the air generator **3,** and for instance located at a distance from the generator **3** that can vary between a few metres and several tens or hundreds of metres.

The fan **11** in turn comprises an electric motor **13** and a fan or other impeller **15** driven by the electric motor **13.**

The plenum **5** may for instance comprise a box-shaped body made of metal sheet or plastic, inside which the compartment **7** is obtained which may have a capacity between **0.01-0.06** cubic metres, between **0.02-0.05** cubic metres or between **0.025-0.047.**

The plenum **5** is preferably provided with one or more air inlets, not shown, arranged to let air coming from outside the plenum **5** flow into the internal compartment **7** .

The ventilation or air conditioning system **1** is provided with a fan control system arranged for control the electric motor **13** depending on the air pressure present in the internal compartment **7** of the plenum **5.**

Preferably the fan control system is arranged for controlling the rotation speed and/or the driving torque of the electric motor **13.**

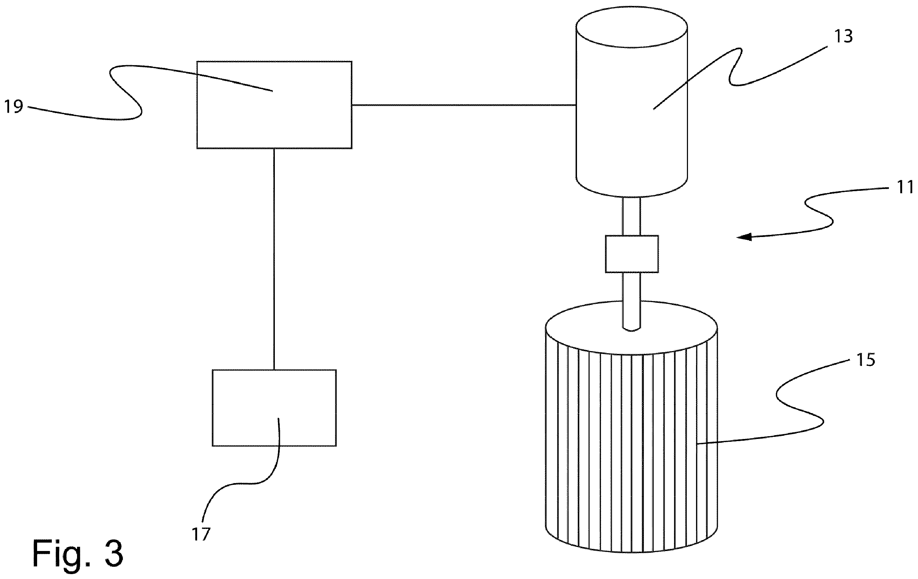

The fan **11** is preferably of the centrifugal type (Figure **3**) but it can also be of the axial type.

Advantageously the fan control system is arranged for feedback controlling the electric motor **13** depending on the pressure of the air present in the internal compartment **7** of the plenum **5.**

For this purpose the fan control system may comprise at least a pressure sensor **17** arranged for detecting the air pressure inside the internal compartment of the plenum **7.**

Preferably the pressure sensor **17** is at least in part contained in the internal compartment **7.**

Advantageously the pressure sensor **17** is of the differential type, and arranged for measuring the difference of the relative pressure of the air between the inside of the compartment **7** and the space outside the plenum **5.**

A differential-type sensor is advantageous in that it provides precise and reliably measures even during sudden temperature changes in the compartment **7.**

In alternative the differential pressure sensor **17** may be replaced by a pair of absolute pressure sensors, installed such that one can detect the air absolute pressure within the compartment **7,** the other can detect the absolute atmospheric pressure of the environment outside the plenum **5.**

The differential pressure in the compartment **7** can thus be obtained by the difference in the measurements of the two absolute pressure sensors.

Preferably the pressure sensor **17** is arranged such to detect the air pressure in a zone of the compartment **7** that is as much as possible free from turbulences and in which the air speed is as slow as possible, such to detect an air pressure that is as static as possible.

The fan control system further preferably comprises a first logic unit **19,** in turn comprising for instance a microprocessor circuit or other electronic computer, arranged for receiving the pressure sensor **17** measurements and based on them -and preferably also based on the commands of the thermostat **14** possibly present- generate a motor control signal which controls the motor **13,** preferably controlling the rotation speed and/or the driving torque thereof which causes the impeller **15** rotate.

For this purpose the logic unit **19** is preferably arranged for controlling the electric motor **13** such to maintain the air pressure detected by the sensor **17** or more generally the air pressure inside the compartment **7** around a predetermined reference pressure or in any case not above a maximum pressure threshold and/or not below a minimum pressure threshold.

Such reference pressure is preferably comprised between **10** and **100** Pascals above the atmospheric pressure outside the internal compartment **7.**

Advantageously the logic unit **19** is provided with a manual selector by means of which the installer or maintenance operator may quickly and easily modify the value of such reference pressure.

Such reference pressure may for example be substantially constant over time, and not substantially vary when the fan **11** is active, or substantially not vary in a time range for instance equal to or greater than five minutes, or equal to or greater than **15** minutes, **30** minutes, **60** minutes.

Preferably the logic unit **19** is preferably arranged for controlling the electric motor **13** such to maintain the air pressure detected by the sensor **17** or more generally the air pressure inside the internal compartment **7** within a predetermined tolerance range containing the predetermined reference pressure.

Such tolerance range is preferably comprised between +/- **40** Pascals, and more preferably comprised between +/- **20** Pascals, more preferably comprised between +/- **4** Pascals and still more preferably comprised between +/- **2** Pascals.

In order to control the motor **13** the logic unit **19** or more generally the fan control system in a particular embodiment may for instance implement an algorithm of the proportional/integrative/derivative (PID) type.

The air generator **3,** and more preferably the plenum **5,** may be possibly provided with one or more air valves **21** arranged for reversibly close and open at least part of, and more preferably all, the outlet ports **9.**

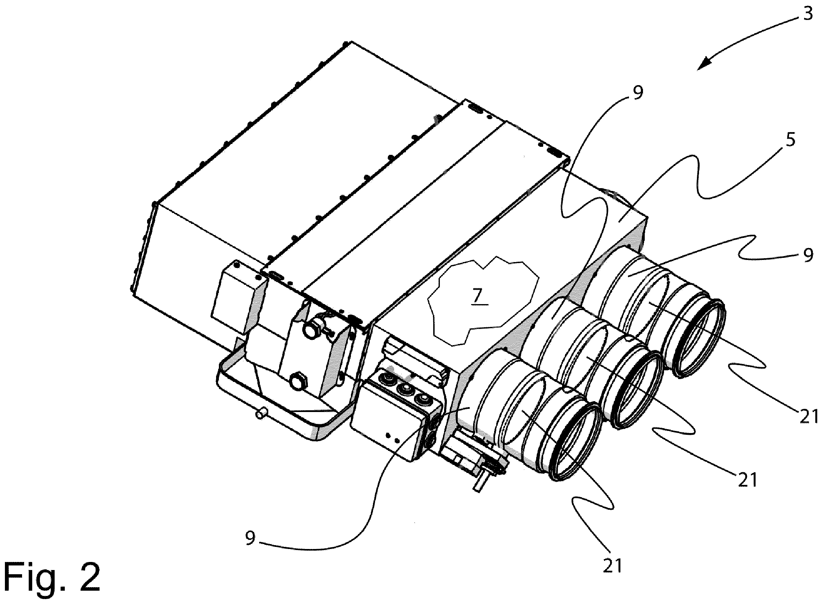

The air valve **21** may for example be a throttle valve (Figure **2**).

In a particular embodiment such air valves **21** may only be able to completely close or completely open the respective outlet ports **9,** and thus operate as valves of the wholly open/wholly closed type, ON/OFF.

In another particular embodiment such air valves **21** may be able to open and close the respective outlet ports **9** not just completely but also partially, and to vary the pass-through section of the respective outlet ports **9** gradually or by skipping, i.e. in a stepped manner, with a number of steps for instance ranging from three to ten or from three to sixteen or from four to eight.

The previous expedients, and especially the fan control based on the air pressure detected in the internal compartment **7,** allow the noise of the system **1** and the thermal drift be remarkably reduced when the majority of the air valves **21** supplying the different and often several thermal zones **ZT1-ZT4** are partially or completely closed.

As a matter of fact a traditional on/off system cannot detect whether an air valve **21** is being closed, but only if the valve **21** is completely closed.

If the only air valve **21** left open is being closed, it will be in any case passed through by an excessive air flow rate and it will whistle.

Furthermore a traditional air generator, often called "*fancoil*" in the present technical jargon, of the three-speed type delivers about **8** Kw of heating.

This means providing about **1.2** kW of heat power to each closed space if they are six.

Even operating at the minimum fan speed, such a *fancoil* with only one open valve will output at least **2-2.5** kW into the respective closed space, which will continuously tend to heat until the fan is switched off, then it will cool, a new heating phase will then follow and so on, in a common sequence of switching-on and switching-off cycles, the typical ON/OFF of the known-type air conditioners.

By controlling the pressure according to the invention it will instead be possible to deliver an air flow rate that is always suitable for that space regardless of the fact that the other air valves or delivery nozzles **12** are open or closed.

If the fan control system maintains for instance a **70** Pascal overpressure in the plenum **5** , it is not important which of the other air nozzles **12** or valves **21** are open; it is sufficient to adjust each air nozzle **12** or valve **21** such that the thermal power delivered is adequate to the respective closed space during the installation step; thereafter, the air flow rate, and thus the thermal power delivered to each space, will be completely independent from the opening or closing of the other air nozzles **12** or valves **21.**

Such advantages can be appreciated both in case the air valves **21** can operate wholly open/wholly closed, and in case they can have different opening degrees.

More generally the pressure-based control in the plenum allows to maintain, in the closed spaces to be heated, conditioned or even just ventilated, air flow rates that are closer to those provided by the design if compared to the current control systems.

In one particular embodiment the logic unit **19** or more generally the fan control system can control the motor **13** or more generally the fan **11** on the basis of the number of air valves **21** which, at a certain reference time, are partially or completely open or partially or completely closed.

For example, the air valves **21** may be controlled in an ON/OFF mode and switch only between a first wholly open condition and a second wholly closed condition based on the command signals output by one or more thermostats, but the fan control system can control the motor **13** on the basis of the pressure detected in the plenum **5** as above described.

Advantageously the fan control system may be set or in any case arranged not to supply the motor **13** at least when all the air valves **21** are wholly closed, or when the sum of all the pass-through sections of all the valves **21** is equal to or less than a predetermined threshold, wherein the opening and closure of the air valves **21** can be controlled for example by one or more thermostats **14.**

In alternative or in combination with the above the fan control system may be set or in any case arranged not to supply the motor **13** when the one or more thermostats **14** do not send any request of heating or cooling any closed space to be heated or cooled.

The electric motor **13** may be any type of rotary motor, for instance which can be supplied by asynchronous or synchronous alternating current, of the brushless type i.e. without brushes or which can be supplied by direct current.

If it is brushless, the motor **13** offers the advantage of adjusting the fan flow rate **11** continuously and with a remarkable precision over a very wide adjustment range.

If is it of the asynchronous alternating current type, the motor **13** offers the advantage of being cheaper to manufacture than a brushless motor.

If the motor **13** is of the asynchronous alternating current type, the ventilation or air conditioning system **1** advantageously comprises a motor supply system **23** arranged for supplying the motor **13** with a time-varying current, in such a way to vary the air flow rate blown by the fan **11.**

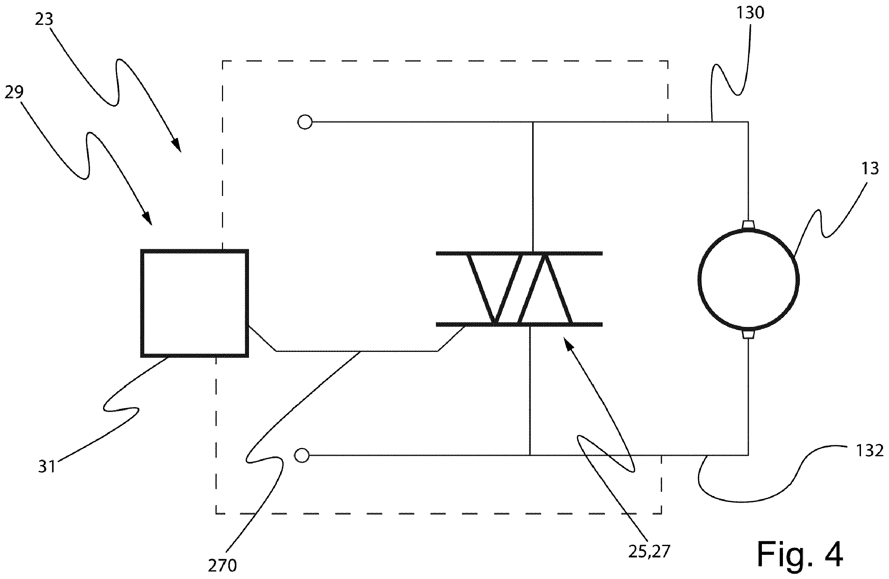

The motor supply system **23** according to the invention comprises a semiconductor switch **25** and a power supply control system **29** arranged for causing the current and/or voltage from the semiconductor switch **25** -for instance the current flowing through the conductors **130, 132** of Figure **4****-** and with which the latter supplies the electric motor **13,** to have:
a) a root mean square equal to a predetermined target value, unless a first predetermined tolerance and/or
b) a symmetry degree equal to or lower than a predetermined symmetry threshold.

For this purpose the power supply control system **29** is arranged for detecting -preferably in real time-the current and/or voltage from the semiconductor switch **25,** and with which the latter supplies the electric motor **13.**

For this purpose the power supply control system **29** or more generally the motor supply system **23** may be arranged for sampling the current and/or voltage from the semiconductor switch **25** with a sampling frequency equal to or greater than **50** Hertz, more preferably equal to or greater than **100** Hertz and still more preferably equal to or greater than **200** Hertz, **400** Hertz or **600** Hertz.

Always for this purpose the power supply control system **29** or more generally the motor supply system **23** may be possibly arranged for acquiring and processing the current and/or voltage from the semiconductor switch **25** without sampling or discretizing them, i.e. acquiring and treating them as merely analog magnitudes.

Such first predetermined tolerance is preferably equal to or less than +/- **25**% of the predetermined target value of the root mean square, more preferably equal to or less than +/- **15**% of the target value, more preferably equal to or less than +/- **10**% of the target value, more preferably equal to or less than +/- **5**% of the target value and still more preferably equal to or less than +/- **1**% of the target value.

The motor supply system **23** can be preferably supplied with the common power grid alternating current, i.e. with a current that varies in a substantially sinusoidal way with a fundamental frequency which is constant over time and for example equal to about **50** hertz or **60** hertz or in any case comprised between **40-100** hertz.

The semiconductor switch **25** comprises in turn a controllable semiconductor device **27** capable of driving the current in both directions when it is activated by a suitable switch control system, preventing the current from passing in both directions when deactivated, and which is arranged for supplying the electric motor **13.**

More preferably the drivable semiconductor switch **27** comprises one or more controllable diodes.

More preferably the drivable semiconductor device **27** comprises at least a triac.

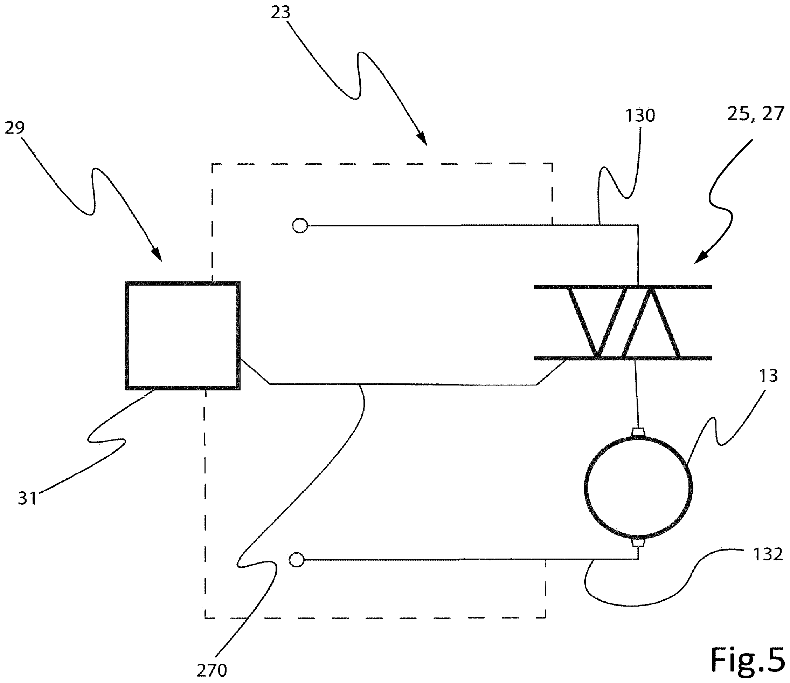

The triac **27** is preferably connected in series to the motor **13** in order to supply it (Figure **5**).

In alternative it can supply the motor **13** also if connected in parallel thereto (Figure **4**)

For this purpose the anode or cathode of the triac **27** is preferably connected in series to the motor **13** in such a way to drive the current supplying it.

Preferably the root mean square (rms) of the triac **27** current has a maximum admissible value equal to or greater than **1** Ampere, more preferably equal to or greater than **4** Ampere and still more preferably equal to or greater than **8** Ampere.

The triac **27** can advantageously provide an output voltage directly at **230** Volts and/or at one of the following nominal voltages: **100** Volts, **110** Volts, **115** Volts, **120** Volts, **127** Volts, **220** Volts, **230** Volts, **240** Volts, **260** Volts, **280** Volts, **300** Volts, **320** Volts.

The power supply control system **29** preferably comprises a second logic unit **31,** which can comprise for example a microprocessor circuit or other electronic processor.

Preferably the power supply control system **29** controls the gate **270** of the triac **27,** transmitting through it voltage, current or optical control signals which put the triac **27** in the conduction or interdiction state.

Such control signals can be analog or digital, for instance digital output with a sampling frequency for example equal to or greater than **50** hertz, more preferably equal to or greater than **100** Hertz and still more preferably equal to or greater than **200** Hertz, **400** Hertz or **600** Hertz.

Such control signals are preferably synchronized with respect to the passage through the zero volt of the sine wave of the motor power supply.

The power supply control system **29** is configured to output the control signals with a delay of activation with respect to such passage through zero which is preferably comprised between **0** and **100** milliseconds, more preferably between **0-50** milliseconds, or between **0-30** milliseconds or between **0-20** milliseconds, **0-4** milliseconds or **0-0.5** milliseconds.

The power supply control system **29** is configured to output the control signals with a delay resolution preferably less than **4** milliseconds, more preferably equal to or less than **0.5** milliseconds.

Advantageously the power supply control system **29** is set or in any case arranged for controlling the rotation speed and/or driving torque of the motor **13** preventing the electric motor **13** be supplied in a series of first time intervals and allowing to supply the electric motor **13** in a series of second time intervals.

Preferably the duration of each of these first and second time intervals may each be even less than the period of the sine wave formed by the current and/or sinusoidal voltage of the external power grid - for instance of the country, region of even of a generator external to the system **1-** supplying the system **1** or at least the motor supply system **23.**

Preferably the duration of these first and/or second time ranges is equal to or less than the semi-period of the sine wave formed by the sinusoidal current and/or wave of the aforesaid external power supply power grid.

Still more preferably the duration of these first and/or second time ranges is equal to or less than the half, one quarter, one eighth, one sixteenth of the period of the sinusoidal current and/or voltage of the aforesaid external supply power grid, and for instance equal to or less than **0.02** seconds, **0.01** seconds, **2** milliseconds, **1** millisecond, **0.2** milliseconds, **0.1** milliseconds.

Thereby the power supply control system **29** makes it possible that the triac or other drivable semiconductor device **27** supplies the motor **13** with a train or comb of current and voltage pulses i.e. with an undulatory and partialized voltage, and this pulse comb or train adjusts the root mean square value of the current and/or voltage supplying the motor **13** varying the rotation speed and/or the drive torque of the motor **13.**

In this respect the triac or other drivable semiconductor device **27** can control the electric motor **13** by varying a *pulse-width modulation* (PWM), or for example by a *pulse-amplitude modulation,* by *pulse-code modulation,* by *pulse-position modulation* or by other types of modulation, or still by adjusting the conduction time from a wave reference; such reference may be the passage through the zero-volt point of the voltage wave or of the zero-ampere wave of the supply current.

The duration of the first and/or second time intervals may be constant or variable over time, and in particular constant or variable over time intervals with a length equal to or less than the period or semi-period of the sine wave formed by the voltage or current of the aforesaid external power supply grid.

The predetermined target value of the supply current and/or voltage immediately downstream of the semiconductor switch **25** and intended to supply the motor **13** may be for example determined by the first logic unit **19,** preferably based on the desired pressure inside the plenum.

The degree of symmetry of the supply current and/or voltage immediately downstream of the semiconductor switch **25** may be for example determined verifying that the integral average of such supply current and/or voltage is equal to or less than a predetermined threshold value, for instance equal to zero and/or equal to or less than **30**% of the root mean square of such supply current and/or voltage immediately downstream of the semiconductor switch **25.**

More preferably the threshold value of predetermined symmetry is equal to or less than **20**% of the root mean square of the supply current and/or voltage immediately downstream of the semiconductor switch **25,** and still more preferably equal to or less than **10**% or **5**% of the root mean square value of the supply current and/or voltage immediately downstream of the semiconductor switch **25.**

Advantageously the supply control system **29** is programmed or in any case arranged for causing the current and/or voltage from the switch **25** and intended to supply the motor **13** to comply with both of the aforementioned conditions a) root mean square) and b) (symmetry degree).

According to the invention the supply control system 29 is programmed or in any case arranged for interrupting the motor supply **13** in case the symmetry degree of the voltage and/or current from the triac or other semiconductor switch is less than the predetermined symmetry threshold.

Preferably in case of insufficient symmetry and/or insufficient root mean square the supply control system **29** is programmed or in any case arranged for interrupting supplying the motor **13** at least for a time interval that is equal to or greater than **20** milliseconds, more preferably equal to or greater than **50** milliseconds, more preferably equal to or greater than **0.1** second, more preferably equal to or greater than **0.5** seconds, more preferably equal to or greater than **1** second, more preferably equal to or greater than **2** seconds and/or equal to or greater than one period, more preferably equal to or greater than **10** periods, more preferably equal to or greater than **50** periods, more preferably equal to or greater than **100** periods of the supply current or voltage of the external power supply grid.

This prevents the asynchronous motor **13** from being supplied with a current or voltage that is too asymmetrical, resulting in malfunctioning thereof -such as gridlock or vibrations due to the discontinuous power supply- and noise.

The ventilation or air conditioning system **1** further preferably comprises a plurality of thermostats **14,** each detecting the temperature and/or other variables of interest -for instance ambient humidity-in a respective room or other thermal zone **ZT1-ZT4** and transmit their measurements to the logic unit **19,** which preferably controls the air generator **3** even on the basis of such measurements; for example, if no thermostat **14** requires to heat or cool its closed spaced -which may only be ventilated- the logic unit can for instance stop completely the fan.

Advantageously the electronic, electric or optical circuits, forming the fan control system and/or the supply control system **29** are fixed to the air generator **3,** e.g. on an external wall of the plenum **5** or other wall of the generator **3.**

Preferably the electronic, electric or optical circuits, forming the fan control system and/or the supply control system **29** are offered for sale or in any case provided to the installers of the complete ventilation or air conditioning system **1** as already fixed to the plenum **5** or more generally to the air generator **3,** such to remarkably simplify and ease the installation operation **3** in the final place of use.

Still to simplify the installation of the air generator **3:**
- the plenum **5,** the fan **11** and the fan control system are sold and/or provided to the installer or other and user of the system **1** already fixed to and/or contained in the air generator **3;** more in particular the first logic unit **19** and/or the supply control system **29** may be advantageously manufactured and/or provided already fixed to the plenum **5;** and/or
- the fan control system is manufactured and/or provided to the installer or other end user of the system **1** already fixed to and/or contained in the electric motor **13** or fixed to or contained in the plenum **5.**

The previously described motor supply system **23** is able to supply the motor **13** with a wave shape that is more suitable for the motor and less disturbed by disturbances of the external power supply grid such as for example a sudden change in voltage .

Without controlling the voltage or current passing through the triac **27,** the latter can more easily undergo saturation due to such grid disturbances, causing the loss of the majority of the power of the motor **13** and increasing noise and vibrations thereof with the risk of damaging it or in any case of considerably reducing its service life.

The motor supply system **23** is furthermore able to control an asynchronous motor **13** with a great precision over a wide adjustment range while involving much cheaper manufacturing and purchasing costs for instance regarding an inverter, a known device presently used to vary the speed or the torque of the asynchronous motors.

More particularly the motor supply system **23** allows the motor **13** be operated at rotation regimes that are particularly low with respect to its nominal speed, particularly advantageous for driving the fan of a central air generator **3** supplying a multi-zone ventilation, heating or air conditioning system, also contributing to significantly reduce noise and thermal drift when most of the air valves **21** supplying the different and often several thermal zones **ZT1-ZT4** are partially or completely closed.

The precision of the motor supply system **23** is such to allow noise and thermal drift be reduced even when the air valves **21** are of the modulation type.

The motor supply system **23** allows to obtain such results, more than satisfactory, with a cheap asynchronous motor **13** which, as said, is generally less expensive than an electronic excitation motor (*brushless*) or also than an inverter required to vary the speed of the asynchronous motor.

Also an electronic board of which the first logic unit **19** of the fan control system and/or the power supply control system **29** may be part can easily be cheaper than an inverter of the known type used to control and supply asynchronous motors.

Furthermore the precision in controlling the pressure in the plenum **5** allows even only one air valve **21** be supplied with large-sized air generators **3** , for instance providing an air flow rate of about 80 cubic metres/hour with a *fancoil* or other air generator **3** with a rated capacity of **1300** cubic metres/hour, with a resulting adjustment range equal to **10**% of the flow rate, for instance if the pressure in the plenum **5** is controlled within a tolerance of +/- **2** Pascals.

The embodiments previously described are subject to different modifications and variations without departing from the scope of protection of the present invention which is solely defined by the claims.

For example a controllable semiconductor device **27** may be or comprise not only a triac but also a quadrac, a transistor, a pair of controlled diodes connected antiparallel.

The triac **27** may also be an opto-triac, i.e. a triac whose gate **270** transmits optical and non-electrical signals to drive the triac itself.

Every reference in this description to "an embodiment", "an example of embodiment" means that a particular characteristic or structure described in relation to such embodiment is comprised in at least one embodiment of the invention and in particular in a particular variant of the invention as defined in a main claim.

The fact that such expressions appear in various steps of the description does not imply that they necessarily only refer to the same embodiment.

Furthermore, when a characteristic, element or structure is described in relation to a particular embodiment, it is observed that it falls within the skills of the average person skilled in the art to apply such characteristic, element or structure to other embodiments.

Numerical references that only differ in terms of different superscripts **21', 21", 21**^{III} unless specified otherwise indicate different variants of an element with the same name.

Moreover, all details may be replaced with other technically equivalent elements.

For example, the materials used, and the dimensions, may be any according to the technical requirements.

It is to be understood that an expression of the type "A *comprises* B, C, D" or "A *is formed by* B, C, D" also comprises and describes the special case in which "A *is comprised of* B, C, D".

The expression "*A comprises an element B*" unless specified otherwise can be interpreted as "*A comprises one or more elements B".*

References to a "first, second, third, ... n-th entity" have the sole aim of distinguishing them from one another but the indication of the n-th entity does not necessarily imply the existence of the first, second ... (n-**1**)th entity.

## Claims

1. Ventilation or air conditioning system (**1**) comprising an air generator (**3**), in turn comprising:
- a plenum (**5**) forming an internal compartment (**7**) and at least one outlet port (**9**) in fluid communication with the internal compartment (**7**); and
- a fan (**11**) arranged for introducing air into the internal compartment (**7**) so as to generate a flow of air leaving the at least one outlet port (**9**);
- a motor supply system (**23**);
and wherein:
- the fan (**11**) comprises in turn an electric motor (**13**) and an impeller (**15**) driven by the electric motor (**13**);
- the motor supply system (**23**) is arranged for supplying the electric motor (**13**) with a time-varying electric current and/or voltage and comprising in turn a semiconductor switch (**25)**;
**characterized in that** the motor supply system (**23**) further comprises a power supply control system (**29)** configured to detect the current and/or voltage coming from the semiconductor switch (25) and arranged for causing the current and/or voltage from the semiconductor switch (**25**) and with which the latter supplies the electric motor (13), to have:
a) a root mean square equal to a predetermined target value, within a first predetermined tolerance and/or
b) a symmetry degree equal to or higher than a predetermined symmetry threshold, the power supply control system (29) being configured to interrupt the supply to the electric motor (13) in case the symmetry degree of the voltage and/or current from the semiconductor switch (25) is less than the predetermined symmetry threshold.

2. Ventilation or air conditioning system according to claim **1,** wherein the semiconductor switch (**25)** comprises a triac.

3. Ventilation or air conditioning system according to claim **1** or **2,** wherein the supply control system (**29)** is arranged for detecting the current and/or voltage coming from the semiconductor switch (**25**), with which the latter supplies the electric motor (1**3**).

4. Ventilation or air conditioning system according to at least one or more claims **1** to **3,** wherein an operation of checking whether the current and/or the voltage coming from the semiconductor switch (**25)** and with which the latter supplies the electric motor (**13)** has a symmetry degree equal to or less than a predetermined symmetry threshold comprises an operation of checking whether such current and/or voltage coming from the semiconductor switch (**25)** has an integral average equal to zero or equal to or less than a predetermined threshold, wherein such threshold is equal to or less than **0.2** times the predetermined target value of the root mean square of this current and/or voltage coming from the semiconductor switch (**25)**, or is equal to or less than **0.2** times the actually detected value of the root mean square of this current and/or voltage coming from the semiconductor switch (**25)**.

5. Ventilation or air conditioning system according to at least one or more of the previous claims, wherein the motor supply system (**23**) is arranged for interrupting the power supply of the electric motor (**13**) for a predetermined rest period of a duration equal to or greater than **0.02** seconds and/or **1** period of the power supply voltage or current external to the ventilation or air conditioning system itself, if the current and/or voltage from the semiconductor switch (**25)** and with which the latter supplies the electric motor (**13)** does not comply with condition a) and/or b) of claim **1.**

6. Ventilation or air conditioning system (**1**) according to one or more of the previous claims, wherein the ventilation or air conditioning system (**1**) is provided with a fan control system arranged for controlling the electric motor (**13**) depending on the air pressure present in the internal compartment (**7**) of the plenum (**5**) on the basis of the number of air valves (21) that are partially or completely open or closed at a certain reference time.

7. Ventilation or air conditioning system (**1**) according to at least claim **6,** wherein the fan control system is arranged for feedback controlling the electric motor (**13**) depending on the air pressure present in the internal compartment (**7**) of the plenum (**5**).

8. Ventilation or air conditioning system (**1**) according to at least claim **6** or **7,** wherein the fan control system is arranged for controlling the rotation speed and/or the driving torque of the electric motor (**13**).

9. Ventilation or air conditioning system according to at least one or more of claims 6 to 8, wherein the plenum (**5**), the fan (**11**) and the fan control system are fixed to and/or contained in the air generator (**3**).

10. Ventilation or air conditioning system according to at least one or more of claims 6 to 9, wherein the fan control system is fixed to and/or contained in the electric motor (**13**).

11. Ventilation or air conditioning system according to at least one or more of claims 6 to 10, comprising at least one pressure sensor (**17**) arranged for detecting the air pressure within the internal compartment (**7**) of the plenum (**7**).

12. Ventilation or air conditioning system according to at least claim **11,** wherein the at least one pressure sensor (**17**) is of the differential type.

13. Ventilation or air conditioning system according to one or more of the previous claims, comprising at least one thermostat (**14**) arranged for detecting the temperature of a space to be heated or cooled, and the ventilation or air conditioning system is arranged for control the electric motor (**13**) depending on the measurements of the at least one thermostat (**14**).

14. Ventilation or air conditioning system according to one or more of the previous claims 11 to 13, wherein the fan control system comprises a first logic unit (19) arranged for receiving measurements from the pressure sensor (17) and to generate, basing on said measurement, a motor control signal for controlling the electric motor (13) causing the impeller to rotate so as to maintain the air pressure within the plenum (**5**) around a predetermined reference pressure and/or not above a first maximum pressure threshold and/or not below a second minimum pressure threshold, wherein the ventilation or conditioning system includes a manual selector allowing the value of said reference pressure and/or said first maximum pressure threshold and/or said second minimum pressure threshold be selected.

## Patentansprüche

1. Belüftungs- oder Klimaanlage (**1**), die einen Luftgenerator (**3**) umfasst, der wiederum Folgendes umfasst:
- einen Kasten (**5**), der einen Innenraum (**7**) und mindestens eine Auslassöffnung (**9**) in Fluidkommunikation mit dem Innenraum (**7**) bildet; und
- ein Gebläse (**11**), das zum Einführen von Luft in den Innenraum (**7**) angeordnet ist, um einen Luftstrom zu erzeugen, der die mindestens eine Auslassöffnung (**9**) verlässt;
- ein Motorversorgungssystem (**23**);
und wobei:
- das Gebläse (**11**) wiederum einen Elektromotor (**13**) und ein von dem Elektromotor (**13**) angetriebenes Laufrad (**15**) umfasst;
- das Motorversorgungssystem (**23**) angeordnet ist, um den Elektromotor (**13**) mit einem zeitlich variierenden elektrischen Strom und/oder Spannung zu versorgen und umfasst wiederum einen Halbleiterschalter (**25**);
**dadurch gekennzeichnet, dass** das Motorversorgungssystem (**23**) ferner ein Leistungsversorgungssteuersystem (**29**) umfasst, das so konfiguriert ist, dass es den/die vom Halbleiterschalter (25) kommenden Strom und/oder Spannung erfasst und so angeordnet ist, dass es bewirkt, dass der Strom und/oder die Spannung vom Halbleiterschalter (**25**) und mit dem/der dieser den Elektromotor (13) versorgt, Folgendes aufweist:
a) einen Effektivwert gleich einem vorbestimmten Zielwert innerhalb einer ersten vorbestimmten Toleranz und/oder
b) einen Symmetriegrad gleich oder höher als ein vorbestimmter Symmetrieschwellenwert, wobei das Leistungsversorgungssteuersystem (29) dazu konfiguriert ist, die Versorgung des Elektromotors (13) zu unterbrechen, falls der Symmetriegrad der Spannung und/oder des Stroms von dem Halbleiterschalter (25) kleiner als der vorbestimmte Symmetrieschwellenwert ist.

2. Belüftungs- oder Klimaanlage nach Anspruch **1,** wobei der Halbleiterschalter (**25**) einen Triac umfasst.

3. Belüftungs- oder Klimaanlage nach Anspruch **1** oder **2,** wobei das Versorgungssteuersystem (**29**) zum Erfassen des Stroms und/oder der Spannung angeordnet ist, der/die von dem Halbleiterschalter (**25**) kommt, mit dem/der dieser den Elektromotor (**13**) versorgt.

4. Belüftungs- oder Klimaanlage nach mindestens einem oder mehreren der Ansprüche **1** bis **3,** wobei ein Vorgang des Überprüfens, ob der Strom und/oder die Spannung, der/die von dem Halbleiterschalter (**25**) kommt und mit dem/der dieser den Elektromotor (**13**) versorgt, einen Symmetriegrad aufweist, der gleich oder kleiner als ein vorbestimmter Symmetrieschwellenwert ist, einen Vorgang des Überprüfens umfasst, ob der Strom und/oder die Spannung, der/die von dem Halbleiterschalter (**25**) kommt, einen ganzzahligen Mittelwert aufweist, der gleich Null oder gleich oder kleiner als ein vorbestimmter Schwellenwert ist, wobei dieser Schwellenwert gleich oder kleiner als das **0,2**-fache des vorbestimmten Zielwerts des Effektivwerts dieses Stroms und/oder dieser Spannung, der/die von dem Halbleiterschalter (2**5**) kommt, oder gleich oder kleiner als das **0,2**-fache des tatsächlich erfassten Werts des Effektivwerts dieses Stroms und/oder dieser Spannung, der/die von dem Halbleiterschalter (**25**) kommt, ist.

5. Belüftungs- oder Klimaanlage nach mindestens einem oder mehreren der vorhergehenden Ansprüche, wobei das Motorversorgungssystem (**23**) dazu angeordnet ist, die Leistungsversorgung des Elektromotors (**13**) für einen vorbestimmten Ruhezeitraum mit einer Dauer gleich oder größer als **0,02** Sekunden und/oder **1** Zeitraum der Leistungsversorgungsspannung oder des Stroms außerhalb der Belüftungs- oder Klimaanlage selbst zu unterbrechen, wenn der Strom und/oder die Spannung von dem Halbleiterschalter (**25**) und mit dem/der dieser den Elektromotor (**13**) versorgt, die Bedingung a) und/oder b) des Anspruchs **1** nicht erfüllt.

6. Belüftungs- oder Klimaanlage (**1**) nach einem oder mehreren der vorhergehenden Ansprüche, wobei die Belüftungs- oder Klimaanlage (**1**) mit einem Gebläsesteuersystem versehen ist, das zur Steuerung des Elektromotors (**13**) in Abhängigkeit von dem im Innenraum (**7**) des Kastens (**5**) vorhandenen Luftdruck auf der Grundlage der Anzahl der Luftventile (21) angeordnet ist, die zu einem bestimmten Referenzzeitpunkt teilweise oder vollständig geöffnet oder geschlossen sind.

7. Belüftungs- oder Klimaanlage (**1**) nach mindestens Anspruch **6,** wobei das Gebläsesteuersystem zur Rückkopplungsregelung des Elektromotors (**13**) in Abhängigkeit von dem im Innenraum (**7**) des Kastens (**5**) vorhandenen Luftdruck angeordnet ist.

8. Belüftungs- oder Klimaanlage (**1**) nach mindestens Anspruch **6** oder **7,** wobei das Gebläsesteuersystem zur Steuerung der Drehzahl und/oder des Antriebsmoments des Elektromotors (**13**) angeordnet ist.

9. Belüftungs- oder Klimaanlage nach mindestens einem oder mehreren der Ansprüche 6 bis 8, wobei der Kasten (**5**), das Gebläse (**11**) und das Gebläsesteuersystem an dem Luftgenerator (**3**) befestigt und/oder in diesem enthalten sind.

10. Belüftungs- oder Klimaanlage nach mindestens einem oder mehreren der Ansprüche 6 bis 9, wobei das Gebläsesteuersystem an dem Elektromotor (**13**) befestigt und/oder in diesem enthalten ist.

11. Belüftungs- oder Klimaanlage nach mindestens einem oder mehreren der Ansprüche 6 bis 10, umfassend mindestens einen Drucksensor (**17**), der zum Erfassen des Luftdrucks innerhalb des Innenraums (**7**) des Kastens (**7**) angeordnet ist.

12. Belüftungs- oder Klimaanlage nach mindestens Anspruch **11,** wobei der zumindest eine Drucksensor (**17**) vom Differentialtyp ist.

13. Belüftungs- oder Klimaanlage nach einem oder mehreren der vorhergehenden Ansprüche, umfassend mindestens einen Thermostaten (**14**), der zum Erfassen der Temperatur eines zu beheizenden oder zu kühlenden Bereichs angeordnet ist, und die Belüftungs- oder Klimaanlage zur Steuerung des Elektromotors (**13**) in Abhängigkeit von den Messungen des mindestens einen Thermostaten (**14**) angeordnet ist.

14. Belüftungs- oder Klimaanlage nach einem oder mehreren der vorhergehenden Ansprüche 11 bis 13, wobei das Gebläsesteuersystem eine erste Logikeinheit (19) umfasst, die zum Empfangen von Messungen von dem Drucksensor (17) und zum Erzeugen eines Motorsteuersignals zum Steuern des Elektromotors (13) basierend auf der Messung angeordnet ist, wodurch bewirkt wird, dass sich das Laufrad dreht, um den Luftdruck innerhalb des Kastens (**5**) um einen vorbestimmten Referenzdruck und/oder nicht über einem ersten maximalen Druckschwellenwert und/oder nicht unter einem zweiten minimalen Druckschwellenwert zu halten, wobei die Belüftungs- oder Klimaanlage einen manuellen Wähler einschließt, der es ermöglicht, den Wert des Referenzdrucks und/oder des ersten maximalen Druckschwellenwerts und/oder des zweiten minimalen Druckschwellenwerts auszuwählen.

## Revendications

1. Système de ventilation ou de climatisation (**1**) comprenant un générateur d'air (**3**), comprenant à son tour:
- un plénum (**5**) formant un compartiment interne (**7**) et au moins un orifice de sortie (**9**) en communication fluidique avec le compartiment interne (**7**); et
- un ventilateur (**11**) conçu pour introduire de l'air dans le compartiment interne (**7**) de manière à générer un flux d'air quittant l'au moins un orifice de sortie (**9**);
- un système d'alimentation de moteur (**23**);
et dans lequel:
- le ventilateur (**11**) comprend à son tour un moteur électrique (**13**) et une roue (**15**) entraînée par le moteur électrique (**13**);
- le système d'alimentation de moteur (**23**) est conçu pour alimenter le moteur électrique (**13**) avec un courant électrique et/ou une tension variable dans le temps et comprend à son tour un commutateur à semi-conducteur (**25**);
**caractérisé en ce que** le système d'alimentation de moteur (**23**) comprend en outre un système de commande de l'alimentation électrique (**29**) configuré pour détecter le courant et/ou la tension provenant du commutateur à semi-conducteur (25) et disposé pour faire en sorte que le courant et/ou la tension provenant du commutateur à semi-conducteur (**25**) et avec lequel ce dernier alimente le moteur électrique (13), ait:
a) une moyenne quadratique égale à une valeur cible prédéterminée, dans une première tolérance prédéterminée et/ou
b) un degré de symétrie égal ou supérieur à un seuil de symétrie prédéterminé, le système de commande de l'alimentation électrique (29) étant configuré pour interrompre l'alimentation du moteur électrique (13) si le degré de symétrie de la tension et/ou du courant provenant du commutateur à semi-conducteur (25) est inférieur au seuil de symétrie prédéterminé.

2. Système de ventilation ou de climatisation selon la revendication **1,** dans lequel le commutateur à semi-conducteur (**25**) comprend un triac.

3. Système de ventilation ou de climatisation selon la revendication **1** ou **2,** dans lequel le système de commande de l'alimentation (**29**) est disposé pour détecter le courant et/ou la tension provenant du commutateur à semi-conducteur (**25**), avec lequel ce dernier alimente le moteur électrique (**13**).

4. Système de ventilation ou de climatisation selon au moins l'une ou plusieurs des revendications **1** à **3,** dans lequel une opération consistant à vérifier si le courant et/ou la tension provenant du commutateur à semi-conducteur (**25**) et avec lequel ce dernier alimente le moteur électrique (**13**) a un degré de symétrie égal ou inférieur à un seuil de symétrie prédéterminé comprend une opération consistant à vérifier si ce courant et/ou cette tension provenant du commutateur à semi-conducteur (**25**) a une moyenne intégrale égale à zéro ou égale ou inférieure à un seuil prédéterminé, dans lequel ce seuil est égal ou inférieur à **0,2** fois la valeur cible prédéterminée de la moyenne quadratique de ce courant et/ou de cette tension provenant du commutateur à semi-conducteur (**25**), ou est égal ou inférieur à **0,2** fois la valeur effectivement détectée de la moyenne quadratique de ce courant et/ou de cette tension provenant du commutateur à semi-conducteur (**25**).

5. Système de ventilation ou de climatisation selon au moins une ou plusieurs des revendications précédentes, dans lequel le système d'alimentation de moteur (23) est disposé pour interrompre l'alimentation électrique du moteur électrique (**13**) pendant une période de repos prédéterminée d'une durée égale ou supérieure à **0,02** secondes et/ou **1** période de la tension ou du courant d'alimentation externe au système de ventilation ou de climatisation lui-même, si le courant et/ou la tension provenant du commutateur à semi-conducteur (**25**) et avec lequel ce dernier alimente le moteur électrique (**13**) ne satisfait pas à la condition a) et/ou b) selon la revendication **1.**

6. Système de ventilation ou de climatisation (**1**) selon l'une ou plusieurs des revendications précédentes, dans lequel le système de ventilation ou de climatisation d'air (**1**) est doté d'un système de commande de ventilateur conçu pour commander le moteur électrique (**13**) en fonction de la pression d'air présente dans le compartiment interne (**7**) du plénum (**5**) sur la base du nombre de soupapes d'air (21) qui sont partiellement ou complètement ouvertes ou fermées à un certain moment de référence.

7. Système de ventilation ou de climatisation (**1**) selon au moins la revendication **6,** dans lequel le système de commande de ventilateur est conçu pour commander par rétroaction le moteur électrique (**13**) en fonction de la pression d'air présente dans le compartiment interne (**7**) du plénum (**5**).

8. Système de ventilation ou de climatisation (**1**) selon au moins la revendication **6** ou **7,** dans lequel le système de commande de ventilateur est conçu pour commander la vitesse de rotation et/ou le couple d'entraînement du moteur électrique (**13**).

9. Système de ventilation ou de climatisation selon au moins une ou plusieurs des revendications 6 à 8, dans lequel le plénum (**5**), le ventilateur (**11**) et le système de commande de ventilateur sont fixés au générateur d'air (**3**) et/ou contenus dans celui-ci.

10. Système de ventilation ou de climatisation selon au moins une ou plusieurs des revendications 6 à 9, dans lequel le système de commande de ventilateur est fixé au moteur électrique (**13**) et/ou contenu dans celui-ci.

11. Système de ventilation ou de climatisation selon au moins une ou plusieurs des revendications 6 à 10, comprenant au moins un capteur de pression (**17**) disposé pour détecter la pression de l'air dans le compartiment interne (**7**) du plénum (**7**).

12. Système de ventilation ou de climatisation selon au moins la revendication **11,** dans lequel l'au moins un capteur de pression (**17**) est du type différentiel.

13. Système de ventilation ou de climatisation selon l'une ou plusieurs des revendications précédentes, comprenant au moins un thermostat (**14**) disposé pour détecter la température d'un espace à chauffer ou à refroidir, et le système de ventilation ou de climatisation est disposé pour commander le moteur électrique (**13**) en fonction des mesures de l'au moins un thermostat (**14**).

14. Système de ventilation ou de climatisation selon l'une ou plusieurs des revendications précédentes 11 à 13, dans lequel le système de commande de ventilateur comprend une première unité logique (19) disposée pour recevoir des mesures du capteur de pression (17) et pour générer, sur la base desdites mesures, un signal de commande du moteur pour commander le moteur électrique (13) entraînant la rotation de la roue de manière à maintenir la pression de l'air dans le plénum (**5**) autour d'une pression de référence prédéterminée et/ou ne dépassant pas un premier seuil de pression maximale et/ou ne descendant pas en dessous d'un second seuil de pression minimale, le système de ventilation ou de climatisation comprenant un sélecteur manuel permettant de choisir la valeur de ladite pression de référence et/ou dudit premier seuil de pression maximale et/ou dudit second seuil de pression minimale.
